(19) Europäisches Patentamt

European Patent Office

Office européen des brevets

(11) Veröffentlichungsnummer: **0 336 111**

**A1**

(12) **EUROPÄISCHE PATENTANMELDUNG**

(21) Anmeldenummer: **89103610.5**

(22) Anmeldetag: **02.03.89**

(30) Priorität: **31.03.88 DE 3810968**

(43) Veröffentlichungstag der Anmeldung:
**11.10.89 Patentblatt 89/41**

(84) Benannte Vertragsstaaten:
**DE FR IT SE**

(51) Int. Cl.⁴: **B60T 15/04**

(71) Anmelder: **ROBERT BOSCH GMBH**
**Postfach 10 60 50**
**D-7000 Stuttgart 10(DE)**

(72) Erfinder: **Schnaeker, Aloys, Ing. (grad.)**
**Felsenstrasse 53/1**
**D-7024 Filderstadt(DE)**
Erfinder: **Gottschalk, Joachim, Dipl.-Ing. (FH)**
**Birkenwaldstrasse 96**
**D-7000 Stuttgart 1(DE)**
Erfinder: **Kuppinger, Klaus**
**Aberlin-Jerg-Strasse 2**
**D-7141 Schwieberdingen(DE)**

(54) **Bremsventil.**

㊼ Ein Zweikreis-Bremsventil weist zwei koaxiale Doppelsitzventile (25,26) zur Steuerung des Bremsdruckes in den Bremskreisen und zwei im Ventilgehäuse (10) koaxial angeordnete Steuerkolben (19,22) zur Betätigung der Doppelsitzventile (25,26) auf. Der Einlaßsitz (27) des Primärventils (25) ist dabei an dem Primärkolben (19) und der Einlaßsitz (28) des Sekundärventils (26) an dem Ventilgehäuse (10) angeordnet, während die Auslaßsitze (29,30) auf jeweils einem Druckbegrenzungskolben (41,42) angeordnet sind. Die Druckbegrenzungskolben (41,42) sind im Sekundärkolben (22) axial verschieblich angeordnet und von jeweils einer am Sekundärkolben (22) sich abstützenden vorgespannten Druckbegrenzungsfeder (45,46) belastet. Durch die beiden separaten, sich jeweils am Sekundärkolben (22) abstützenden Druckbegrenzungsfedern (45,46) bleibt bei Bruch einer der Druckbegrenzungsfedern (45,46) immer ein Bremskreis völlig intakt.

Fig.1

## Bremsventil

### Stand der Technik

Die Erfindung betrifft ein Bremsventil für druckmittelgesteuerte, insbesondere pneumatische Bremsanlagen mit zwei getrennten Bremskreisen in Fahrzeugen, der im Oberbegriff des Anspruchs 1 definierten Gattung.

Insbesondere bei Druckluftbremsanlagen tritt das Problem auf, daß der ständige wachsende Druckluftbedarf immer größere Vorratsbehälter fordert, deren Unterbringung im Fahrzeug aber mit wachsendem Volumen immer schwieriger wird. Man ist daher dazu übergegangen, zur Volumenreduzierung die Druckluftvorratsbehälter höher vorzuspannen und gleichzeitig durch entsprechende Maßnahmen den Betriebsdruck der Bremsanlage auf den vorgeschriebenen, unter dem Hochdruck in den Vorratsbehältern liegenden Bremsdruck zu begrenzen.

Bei einem bekannten Druckluftbremsventil mit einer solchen Druckluftbegrenzungsfunktion (DE-OS 32 07 618) hat man den Sekundärkolben zweiteilig ausgebildet und zwischen den beiden Kolbenteilen eine vorgespannte Druckbegrenzungsfeder angeordnet. An jedem Kolbenteil ist ein Auslaßsitz angeordnet. Wird das Bremsventil betätigt, so werden von den Ventilgliedern zunächst die Auslaßsitze geschlossen und anschließend die Einlaßsitze geöffnet. Die Vorspannung der Druckbegrenzungsfeder sorgt dafür, daß zunächst der Abstand der beiden Kolbenteile voneinander und damit der der Auslaßsitze konstant bleibt. Sobald der in die Ventilkammer eingesteuerte Bremsdruck den Begrenzungsdruck erreicht, gibt die Druckbegrenzungsfeder nach und der Abstand zwischen den beiden Auslaßsitzen verringert sich. Der eingesteuerte Bremsdruck wächst dann nur noch um einen geringen Betrag entsprechend der Federkonstanten der Druckbegrenzungsfeder. Da bei einem Defekt der Druckbegrenzungsfeder, z.B. Bruch, das Bremsventil völlig ausfällt, ist es wichtig, die Druckbegrenzungsfeder entsprechend sicher auszulegen. Durch Vorsehen zweier koaxial ineinanderliegender Federn wird bei Bruch einer Feder eine Sicherheit dadurch erzielt, daß durch die intakte Feder der Bremsdruck auf die Hälfte des vorgegebenen Begrenzungsdruckes begrenzt wird, der jedoch für eine Hilfsbremsung ausreichend ist.

### Vorteile der Erfindung

Das erfindungsgemäße Bremsventil mit den kennzeichnenden Merkmalen des Anspruchs 1 hat den Vorteil, daß bei Defekt einer der beiden Druckbegrenzungsfedern nur ein Bremskreis, und zwar der dem Ventil mit defekter Feder zugeordnete Bremskreis, ausfällt, der andere Bremskreis aber völlig intakt bleibt. Für den Fahrer wird dieser Defekt durch den größeren Leerweg im Bremspedal erkennbar.

Des weiteren ist es auch möglich, durch unterschiedliche Auslegung der Vorspannung der beiden Druckbegrenzungsfedern die Bremsdruckbegrenzung in beiden Bremskreisen auf unterschiedliche Werte festzulegen.

Durch die in den weiteren Ansprüchen aufgeführten Maßnahmen sind vorteilhafte Weiterbildungen und Verbesserungen des im Anspruch 1 angegebenen Bremsventils möglich.

Wenn gemäß einer bevorzugten Ausführungsform der Erfindung im Verschiebeweg des Primärkolbens ein Anschlag so angeordnet wird, daß nach Überschreiten der Vorspannung der Druckbegrenzungsfeder der Primärkolben am Anschlag anliegt und so an einer Weiterbewegung gehindert wird, wird auch ein Druckanstieg entsprechend der Federkonstanten der Druckbegrenzungsfeder unterbunden. Ein solcher Anschlag ist von Vorteil bei progressiver Kennlinie der Druckbegrenzungsfeder oder bei einem Druckverhältnis zwischen den Bremsdrücken in den beiden Bremskreisen. Dabei kann die Federkraft zwischen den beiden Auslaßsitzen sowohl von einer einzigen Druckbegrenzungsfeder aufgebracht werden oder aber, wie eingangs beschrieben, auf zwei Druckfedern gemäß Hauptanspruch aufgeteilt sein.

### Zeichnung

Die Erfindung ist anhand von in der Zeichnung dargestellten Ausführungsbeispielen in der nachfolgenden Beschreibung näher erläutert. Es zeigen:

Fig. 1 einen Längsschnitt eines Zweikreis-Bremsventils,

Fig. 2 ausschnittweise einen Längsschnitt eines Zweikreis-Bremsventils gemäß einem weiteren Ausführungsbeispiel.

### Beschreibung der Ausführungsbeispiele

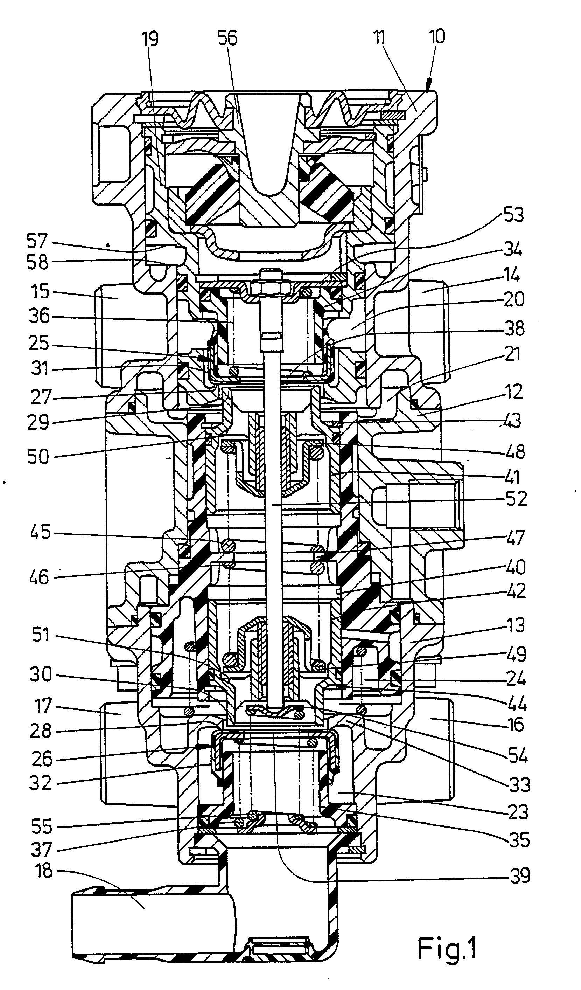

Das in Fig. 1 im Längsschnitt gezeigte Bremsventil ist für Zweikreis-Druckluftbremsanlagen für Kraftfahrzeuge bestimmt, die zwei voneinander unabhängige Bremssysteme haben. Das dreiteilig ausgebildete Ventilgehäuse 10 besteht aus einem Gehäuseoberteil 11, einem Gehäusemittelteil 12 und einem Gehäuseunterteil 13 und weist für jeden Bremskreis zwei Anschlußstutzen 14,15 bzw. 16,17 sowie einen unteren Auslaß-oder Entlüftungsstutzen 18 auf. An die in Fig. 1 jeweils rechts befindlichen Anschlußstutzen 14,16 ist ein nicht weiter gezeigter Luftbehälter anschließbar, während an den in Fig. 1 linken Anschlußstutzen 15,17 der dem jeweiligen Bremskreis zugehörige Radbremszylinder angeschlossen wird. Im Gehäuseoberteil 11 ist ein Primärkolben 19 axial verschiebbar aufgenommen, der eine von der Gehäusewand des Gehäuseoberteils 11 begrenzte Ringkammer 20 trägt, die mit dem Anschlußstutzen 14 in Verbindung steht. Zwischen den Gehäusewänden von Gehäuseoberteil 11 und Gehäusemittelteil 12 ist eine weitere Ringkammer 21 gebildet, die mit dem Anschlußstutzen 15 verbunden ist. Im Gehäusemittelteil 12 und Gehäuseunterteil 13 ist ein Sekundärkolben 22 axial verschiebbar aufgenommen, der zusammen mit der Gehäusewand des Gehäuseunterteils 13 eine Ringkammer 24 begrenzt, die mit dem Anschlußstutzen 17 in Verbindung steht. Der Anschlußstutzen 16 ist mit einer Ringkammer 23 verbunden, die im Gehäuseunterteil 13 vorgesehen ist. Primärkolben 19 und Sekundärkolben 22 sind hohl ausgebildet, wobei der Entlüftungsstutzen 18 mit dem hohlen Inneren der Kolben 19,22 in Verbindung steht.

Zur Steuerung des Bremsdruckes in den beiden Bremskreisen sind in dem Ventilgehäuse 10 zwei Einzelventile, Primär- und Sekundärventil 25,26, die jeweils als Doppelsitzventil ausgebildet sind, koaxial und im Axialabstand zueinander angeordnet. Jedes Einzelventil 25 zw. 26 weist einen Einlaßsitz 27 bzw. 28 und einen Auslaßsitz 29 bzw. 30 sowie jeweils ein mit diesen Sitzen zusammenwirkendes Ventilglied 31 bzw. 32 auf. Der Einlaßsitz 27 des Primärventils 25 ist an dem Primärkolben 19 und der Einlaßsitz 28 des Sekundärventils 26 an einer Gehäusequerwand 33 im Gehäuseunterteil 13 angeordnet. Die Querwand 33 trennt im übrigen die mit den Anschlußstutzen 16 verbundene Ringkammer 23 von der mit dem Anschlußstutzen 17 verbundenen Ringkammer 24, während der Einlaßsitz 27 des Primärventils 25 eine Verbindung zwischen den Ringkammern 20 und 21 herstellt. Die Ventilglieder 31,32 sind kappenförmig ausgebildet und axial verschiebbar auf einem Führungskörper 34 bzw. 35 angeordnet. Der Führungskörper 34 ist im Primärkolben 19 unverschieblich festgelegt, während der Führungskörper 35 im Gehäuseunterteil 13 gehalten ist. Die kappenförmige Ventilglieder 31,32 werden bei unbetätigtem Bremsventil von einer Ventilschließfeder 36 bzw. 37 auf die Einlaßsitze 27 bzw. 28 aufgesetzt und trennen dadurch die beiden Ringkammern 20,21 bzw. 23,24 und damit die Anschlußstutzen 14 und 15 bzw. 16 und 17 voneinander. Die kappenförmigen Ventilglieder 31,32 tragen jeweils eine zentrale Durchgangsöffnung 38 bzw. 39, so daß die Verbindung des hohlen Inneren von Primärkolben 19 unsd Sekundärkolben 22 mit dem Entlüftungsstutzen 18 durch die Ventilglieder 31,32 nicht unterbrochen wird. Bei geschlossenen Einlaßsitzen 27,28 und damit offenen Auslaßsitz 29,30 stehen die Ringkammern 21 und 24 und damit die Anschlußstutzen 15 und 17 mit dem Entlüftungsstutzen 18 in Verbindung.

In der vom hohlen Inneren des Sekundärkolbens 22 gebildeten Axialbohrung 40 sind zwei axial hintereinander angeordnete Druckbegrenzungskolben 41,42 axial verschiebbar angeordnet, die gegenüber der Bohrungswand hermetisch abgedichtet sind. Die beiden Druckbegrenzungskolben 41,42 ragen mit ihrem einen Kolbenende jeweils stirnseitig aus dem Sekundärkolben 22 heraus und tragen hier die Auslaßsitze 29,30 der Einzelventile 25,26, wobei der obere Druckbegrenzungskolben 41 den Auslaßsitz 29 des Primärventils 25 und der untere Druckbegrenzungskolben 42 den Auslaßsitz 30 des Sekundärventils 26 trägt. Die beiden Druckbegrenzungskolben 41,42 liegen bei unbetätigtem Bremsventil unter Federkraft an jeweils einem Anschlag an, der von einem in die Bohrungswand eingelegten Seegering 43 bzw. 44 gebildet wird. Die Federkraft wird jeweils von einer vorgespannten Druckbegrenzungsfeder 45 bzw. 46 aufgebracht, die sich einerseits an einem in der Axialbohrung 40 radial vorstehenden Ringsteg 47 und andererseits an dem zugeordneten Druckbegrenzungskolben 41 bzw. 42 abstützt. Die Abstützung an den Druckbegrenzungskolben 41,42 erfolgt über Federteller 48,49, die an einer inneren Ringschulter 50 bzw. 51 der Druckbegrenzungskolben 41,42 anliegen. Die Federteller 48,49 sind an einer Verbindungsstange 52 geführt, die an einem Ende über einen Quersteg 53 im Primärkolben 19 eingespannt ist und an dem anderen Ende einen Federteller 54 für eine im Gehäuseunterteil 13 sich abstützende Druckfeder 55 trägt, die konzentrisch zu der Ventilschließfeder 37 des Sekundärventils 26 angeordnet ist. Anstelle des mit dem Sekundärkolben 22 einstückigen Ringstegs 47 kann auch in einer glattwandig längsdurchgehende Axialbohrung 40 im Sekundärkolben 22 eine Ringscheibe eingesetzt werden, die mittels in die Bohrungswand eingelegter Seegeringe 43,44 axial unverschieblich in der Axialbohrung 40 gehalten wird.

Der Primärkolben 19 steht mit dem hier nicht dargestellten Bremspedal in mechanischer Verbindung, das an diesem über den im Primärkolben 19 festgelegten Einsatz 56 angreift. Der Primärkolben 19 trägt eine Radialschulter 57, die nach einem vorgegebenen Verschiebeweg des Primärkolbens 19 an einem Ringsteg 58 im Gehäuseoberteil 11 anschlägt. Der Ringsteg 58 ist dabei so angeordnet, daß die Radialschulter 57 bei der Stellung des Primärkolbens 19 zur Anlage kommt, bei welcher die Vorspannung der Druckbegrenzungsfedern 45,46 überschritten ist.

Die Wirkungsweise des vorstehend beschriebenen Bremsventils ist wie folgt:

Wird das Bremspedal betätigt, so geht zunächst der Primärkolben 19 nach unten, bis das Ventilglied 31 des Primärventils 25 den Auslaßsitz 29 erreicht. Damit ist das Einzelventil 25 geschlossen und der Anschlußstutzen 14 ist von dem Entlüftungsstutzen 18 getrennt. Bei weiterer Betätigung verschieben sich nun die über die vorgespannten Druckbegrenzungsfedern 45,46 gekuppelten Auslaßsitze 29,30 gemeinsam nach unten, bis auch der Auslaßsitz 30 des Sekundärventils 26 geschlossen ist und damit auch der Anschlußstutzen 17 des zweiten Bremskreises von der Entlüftung getrennt ist. Die Vorspannung der Druckbegrenzungsfedern 45,46 sorgt dafür, daß zunächst der Abstand der beiden Auslaßsitze 29,30 konstant bleibt.

Bei weiterem Verschieben des Primärkolbens 19 öffnen die beiden Einzelventile 25,26 dadurch, daß nunmehr über die Auslaßsitze 29,30 die Ventilglieder 31,32 von den Einlaßsitzen 27,28 abgehoben werden. Damit gelangt Druckluft aus den Ringkammern 20 und 23 über die geöffneten Einlaßsitze 27,28 zu den Ringkammern 21,24 und von dort über die Anschlußstutzen 15,17 zu den Radbremszylindern. Der eingesteuerte Bremsdruck erhöht sich dabei bei weiterer Verschiebung des Primärkolbens 19 so lange, bis der durch die Vorspannung der Druckbegrenzungsfedern 45,46 vorgegebene Begrenzungsdruck erreicht ist. Mit Erreichen des Begrenzungsdruckes geben die Druckbegrenzungsfedern 45,46 nach und der Abstand zwischen den beiden Auslaßsitzen 29,30 verkürzt sich. Die beiden Einzelventile 25,26 schließen, und der Bremsdruck ist auf den vorgegebenen Maximalbetrag begrenzt.

Würde sich der Primärkolben 19 weiter bewegen, so würde sich der eingesteuerte Bremsdruck um einen Betrag entsprechend der Federkonstanten der Druckbegrenzungsfedern 45,46 erhöhen. Da aber in dem Augenblick, wo der maximale Begrenzungsdruck erreicht ist, und die Einzelventile 25,26 schließen, der Primärkolben 19 mit seiner Radialschulter 57 an dem Ringsteg 58 im Gehäuseoberteil 11 anschlägt, ist eine Weiterbewegung des Primärkolbens 19 blockiert. Damit kann auch der eingesteuerte Bremsdruck nicht weiter anwachsen.

Bricht einer der beiden Druckbegrenzungsfedern 45,46, so fällt der zugeordnete Bremskreis völlig aus, da das jeweilige Einzelventil 25,26 nicht geöffnet werden kann. Der andere Bremskreis bleibt jedoch völlig intakt. Der Fahrer kann diesen Defekt im Bremsventil durch einen größeren Leerweg im Bremspedal erkennen.

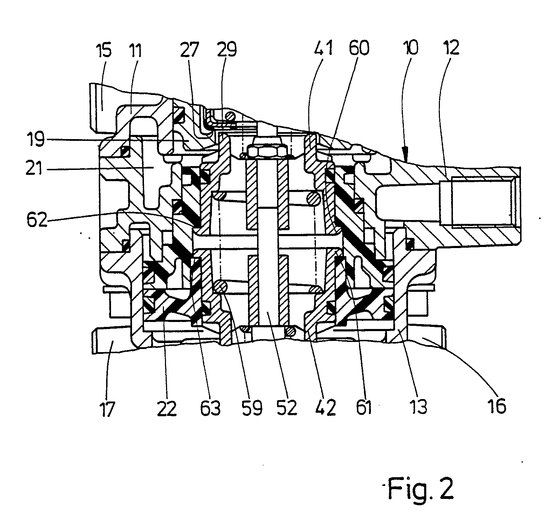

Das in Fig. 2 ausschnittweise und im Längsschnitt dargestellte Bremsventil ist in seinem grundsätzlichen Aufbau identisch mit dem vorstehend zu Fig. 1 beschriebene Bremsventil. Der einzige Unterschied besteht darin, daß die beiden Druckbegrenzungsfedern hier durch eine einzige Druckbegrenzungsfeder 59 ersetzt sind. Diese Druckbegrenzungsfeder 59 stützt sich unmittelbar zwischen den beiden Druckbegrenzungskolben 41,42 ab und weist eine dem vorgegebenen Begrenzungsdruck entsprechende Vorspannung auf. Bei vorgespannter Druckbegrenzungsfeder 59 hintergreifen die Druckbegrenzungskolben 41,42 jeweils mit einem radial nach außen vorspringenden Ringflansch 60 bzw. 61 eine in der die Axialbohrung 40 begrenzenden Bohrungswand des Sekundärkolbens 22 vorgesehene Ringschulter 62 bzw. 63. Im übrigen stimmt der Aufbau dieses Bremsventils mit dem in Fig. 1 überein, so daß gleiche Bauteile mit gleichen Bezugszeichen versehen sind. Da bei Bruch der Druckbegrenzungsfeder 59 beide Bremskreise ausfallen, ist dafür Sorge zu tragen, daß die Druckbegrenzungsfeder 59 entsprechend sicher ausgelegt wird. Wie hier nicht weiter dargestellt ist, wird auch hier der Verschiebeweg des Primärkolbens 19 durch einen entsprechenden Anschlag im Gehäuseoberteil 11 begrenzt. Die Begrenzung erfolgt dann, wenn die Vorspannung der Druckbegrenzungsfedern 59 überschritten ist und die Druckbegrenzungsfeder 59 beginnt, sich zu verkürzen.

**Ansprüche**

1. Bremsventil für druckmittelgesteuerte, insbesondere pneumatische Bremsanlagen mit zwei getrennten Bremskreisen in Fahrzeugen, mit einem Ventilgehäuse, das Anschlußöffnungen für eine Druckmittelquelle und für die Bremskreise aufweist, mit zwei im Ventilgehäuse koaxial angeordneten, jeweils einen Einlaßsitz, einen Auslaßsitz und ein mit diesen zusammenwirkendes Ventilglied aufweisenden Doppelsitzventilen (Primär- und Sekundärventil) zur Steuerung des Bremsdrucks in den Bremskreisen und mit zwei im Ventilgehäuse koaxial angeordneten Steuerkolben (Primär- und Sekundärkolben) zur Betätigung der Doppelsitzventile, wobei der Einlaßsitz des Primärventils an dem von einem Bremspedal betätigbaren Primärkolben und der Einlaßsitz des Sekundärventils an dem Ventilgehäuse angeordnet ist und die Auslaßsitze von Primär- und Sekundärventil auf gegenüberliegenden Stirnseiten des Sekundärkolbens liegen und zur Bremsdruckbegrenzung gegen Federkraft relativ zueinander verschiebbar sind, dadurch gekennzeichnet, daß jeder Auslaßsitz (29,30) auf einem separaten, im Sekundärkolben (22) axial verschiebbaren Druckbegrenzungskolben (41,42 angeordnet ist und daß jeder Druckbegrenzungskolben (41,42) von einer vorgespannten Druckbegrenzungsfeder (45,46) mit zu dem zugehörigen Ventilglied (31,32) hin gerichteter Federkraft belastet ist.

2. Bremsventil nach Anspruch 1, dadurch gekennzeichnet, daß die Druckbegrenzungskolben (41,42) in einer Axialbohrung (40) im Sekundärkolben (22) axial verschieblich geführt sind und daß ein Ende der Druckbegrenzungsfedern (45,46) an einem zwischen den Druckbegrenzungskolben (41,42) in die Axialbohrung (40) hineinragenden Ringsteg (47) abgestützt ist.

3. Bremsventil nach Anspruch 2, dadurch gekennzeichnet, daß jeder Druckbegrenzungskolben (41,42) bei unbelastetem Auslaßsitz (29,30) unter dem Druck der vorgespannten Druckbegrenzungsfeder (45,46) an einem Anschlag (43,44) am Sekundärkolben (22) anliegt.

4. Bremsventil nach Anspruch 2 oder 3, dadurch gekennzeichnet, daß der Ringsteg (47) von einem an der Bohrungswand des Sekundärkolbens (22) radial vorspringenden, mit dieser einstückigen Ringflansch gebildet ist.

5. Bremsventil nach Anspruch 2 oder 3, dadurch gekennzeichnet, daß der Ringsteg (47) von einem in der Axialbohrung (40) einliegenden Ring gebildet ist, der zwischen zwei in der Bohrungswand des Sekundärkolbens (22) eingelegten Seegeringen axial unverschieblich gehalten ist.

6. Bremsventil nach einem der Ansprüche 1 - 5, dadurch gekennzeichnet, daß im Verschiebeweg des Primärkolbens (19) ein dessen Verschiebebewegung hindernder Anschlag (58) derart angeordnet ist, daß bei Überschreiten der Vorspannung der Druckbegrenzungsfedern (45,46) der Primärkolben (19) an dem Anschlag (58) anliegt.

7. Bremsventil nach Anspruch 6, dadurch gekennzeichnet, daß der Anschlag von einem im Ventilgehäuse (10) angeordneten Ringsteg (58) gebildet ist, an dem der Primärkolben (19) mit einer Radialschulter (57) anschlägt.

8. Bremsventil nach Anspruch 6 oder 7, dadurch gekennzeichnet, daß die beiden Druckbegrenzungsfedern sich ohne Anlage am Sekundärkolben (22) unmittelbar aneinander abstützen und vorzugsweise zu einer einstückigen Druckbegrenzungsfeder (59) zusammengefaßt sind (Fig. 2).

21 778

Fig.1

21 778

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 309 684 (LUCAS INDUSTRIES) * Das ganze Dokument * | 1,2,5 | B 60 T 15/04 |
| A | | 4,6,7 | |
| | --- | | |
| A | DE-C-1 262 091 (WAGNER ELECTRIC) * Figur * | 1 | |
| | --- | | |
| A | GB-A-2 121 496 (LUCAS INDUSTRIES) * Figur * | 1 | |
| | --- | | |
| A | GB-A-2 131 106 (LUCAS INDUSTRIES) * Figur 1 * | 1 | |
| | ----- | | |

**RECHERCHIERTE SACHGEBIETE (Int. Cl.4)**

B 60 T 15/00

Der vorliegende Recherchenbericht wurde für alle Patentansprüche erstellt

| Recherchenort | Abschlußdatum der Recherche | Prüfer |
|---|---|---|
| BERLIN | 05-07-1989 | LUDWIG H J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPO FORM 1503 03.82 (P0403)